# EUROPÄISCHE PATENTANMELDUNG

(11) **EP 4 286 201 A1**
(43) Veröffentlichungstag der Anmeldung: **06.12.2023**
(21) Anmeldenummer: 23175531.5
(22) Anmeldetag: 26.05.2023
(51) Int. Cl.: B60L 1/00, B60L 50/50, B60K 17/28, B60K 1/02, B60K 17/344

(54) **ELEKTRISCH BETREIBBARER ANTRIEBSSTRANG UND FAHRZEUG**

(30) Priorität: 30.05.2022 DE 102022205334
(71) Anmelder: ZF Friedrichshafen AG, 88046 Friedrichshafen (DE)
(72) Erfinder: Pfeffer, Andreas, 94234 Viechtach (DE); Reitinger, Franz, 4092 Esternberg (AT); Mühlbauer, Alexander, 94575 Windorf (DE); Brilka, Tobias, 94547 Iggensbach (DE)
(74) Vertreter: ZF Friedrichshafen AG

(57) **Zusammenfassung**

Die Erfindung betrifft einen elektrisch betreibbaren Antriebsstrang (10), umfassend ein erstes Verteilergetriebe (11), einen ersten Elektromotor (12) und eine erste Achse (13, 13') sowie ein zweites Verteilergetriebe (14), einen zweiten Elektromotor (15, 15') und eine zweite Achse (16, 16'), wobei das erste Verteilergetriebe (11) einen ersten Eintrieb (17), einen ersten Achsabtrieb (18) und einen ersten Kopplungsabtrieb (19) aufweist, wobei das zweite Verteilergetriebe (14) einen zweiten Eintrieb (20), einen zweiten Achsabtrieb (21) und einen zweiten Kopplungsabtrieb (22) aufweist und wobei der erste Kopplungsabtrieb (19) mit dem zweiten Kopplungsabtrieb (22) über eine Kopplungswelle (23) koppelbar ist. Der erfindungsgemäße Antriebsstrang (10) zeichnet sich dadurch aus, dass das erste Verteilergetriebe (11) weiterhin einen ersten Nebenabtrieb (24) aufweist. Die Erfindung betrifft weiterhin ein entsprechendes Fahrzeug.

## Beschreibung

Die vorliegende Erfindung betrifft einen elektrisch betreibbaren Antriebsstrang gemäß dem Oberbegriff von Anspruch 1 sowie ein entsprechendes Fahrzeug.

Im Stand der Technik sind bereits unterschiedliche Gattungen von elektrisch angetriebenen Nutzfahrzeugen, wie etwa Radlader, LKW, Minenfahrzeuge oder an Flughäfen zur Gepäckbeförderung genutzte Fahrzeuge bekannt.Diese elektrisch angetriebenen Nutzfahrzeugesind entweder rein elektrisch angetrieben, d.h. sie verfügen für ihre Energieversorgung ausschließlich über eine elektrische Batterie bzw. einen elektrischen Akkumulator, oder aber sie sind diesel-elektrisch angetrieben, was bedeutet, dass die benötigte Energie von einem dieselgetriebenen Generator, üblicherweise in Verbindung mit einem elektrischen Pufferspeicher, wie z.B. einem entsprechend dimensionierten Kondensator, bereitgestellt wird. In allen Fällen wird die für den Fahrantrieb bzw. den Arbeitsantrieb benötigte mechanische Leistung von einem oder mehreren Elektromotoren erbracht.

In diesem Zusammenhang ist aus der DE 10 133 815 A1 eine fahrbare Flugzeugbeladevorrichtung mit einem Rahmen, einer relativ zum Rahmen vertikal verfahrbaren Hauptplattform und einer relativ zum Rahmen vertikal verfahrbaren, an das Flugzeug andockbaren Frontplattform sowie Kraftmitteln zum unabhängigen Heben und Senken der Plattformen bekannt. Die Flugzeugbeladevorrichtung der DE 10 133 815 A1 verfügt über einen elektrischen Antrieb.

Aus der DE 20 2016 006 076 U1 ist ein Anhänger für einen elektrisch betriebenen LKW bekannt, der zumindest eine Aussparung für die Aufnahme von jeweils einem oder mehreren Akkupacks aufweist.

Aus der DE 10 2018 206 411 A1 ist ein Antriebsstrang für eine Arbeitsmaschine bekannt, der eine Vorderachse mit einer elektrischen Vorderachsantriebseinheit und eine Hinterachse mit einer elektrischen Hinterachsantriebseinheit aufweist. Weiterhin weist der Antriebsstrang eine schaltbare Kupplung auf, welche die Vorderachsantriebseinheit mit der Hinterachsantriebseinheit triebverbinden kann.

Die bekannten elektrisch betreibbaren Antriebsstränge sind jedoch dahingehend nachteilig, als dass die unterschiedlichen Elektromotoren ausschließlich zum Vortrieb der Arbeitsmaschine bzw. des Fahrzeugs vorgesehen sind, selbst wenn in bestimmten Situationen nur einer der Elektromotoren für den Vortrieb benötigt wird.

Es ist eine Aufgabe der Erfindung, einen verbesserten elektrisch betreibbaren Antriebsstrang vorzuschlagen.

Diese Aufgabe wird erfindungsgemäß durch den elektrisch betreibbaren Antriebsstrang gemäß Anspruch 1
gelöst. Vorteilhafte Ausgestaltungen und Weiterbildungen der Erfindung gehen aus den abhängigen Ansprüchen hervor.

Die Erfindung betrifft einen elektrisch betreibbaren Antriebsstrang, umfassend ein erstes Verteilergetriebe, einen ersten Elektromotor und eine erste Achse sowie ein zweites Verteilergetriebe, einen zweiten Elektromotor und eine zweite Achse, wobei das erste Verteilergetriebe einen ersten Eintrieb, einen ersten Achsabtrieb und einen ersten Kopplungsabtrieb aufweist, wobei das zweite Verteilergetriebe einen zweiten Eintrieb, einen zweiten Achsabtrieb und einen zweiten Kopplungsabtrieb aufweist und wobei der erste Kopplungsabtrieb mit dem zweiten Kopplungsabtrieb über eine Kopplungswelle koppelbar ist. Der erfindungsgemäße Antriebsstrang zeichnet sich dadurch aus, dass das erste Verteilergetriebe weiterhin einen ersten Nebenabtrieb aufweist.

Die Erfindung beschreibt also einen elektrisch betreibbaren Antriebsstrang. Der Antriebsstrang ist insbesondere dazu ausgebildet, eine geländegängige Arbeitsmaschine, ein geländegängiges Sonderfahrzeug wie beispielsweise einen Kran oder Radpanzer oder einen allradgetriebenen LKW anzutreiben, was bedeutet, dass er zum Dauerbetrieb mit im Vergleich zu im PKW-Betrieb oder auch im LKW-Betrieb sehr hohen Leistungen ausgelegt sein muss. Ein elektrischer Antriebsstrang eines PKW wäre hierzu beispielsweise nicht geeignet.

Der erfindungsgemäße Antriebsstrang umfasst ein erstes Verteilergetriebe, dem ein erster Elektromotor und eine erste Achse zugeordnet sind. Der erste Elektromotor stellt ein Drehmoment und eine Drehzahl bereit, die über den ersten Eintrieb in das erste Verteilergetriebe eingeleitet werden können und vom ersten Verteilergetriebe gewandelt werden, um dann über den ersten Achsabtrieb zum Antrieb der ersten Achse an die erste Achse weitergeführt werden zu können.

Der erfindungsgemäße Antriebsstrang umfasst weiterhin ein zweites Verteilergetriebe, dem ein zweiter Elektromotor und eine zweite Achse zugeordnet sind. Auch der zweite Elektromotor stellt ein Drehmoment und eine Drehzahl bereit, die über den zweiten Eintrieb in das zweite Verteilergetriebe eingeleitet werden können und die vom zweiten Verteilergetriebe gewandelt werden, um zum Antrieb der zweiten Achse an die zweite Achse weitergeführt werden zu können.

Außerdem weisen das erste Verteilergetriebe und das zweite Verteilergetriebe jeweils einen Kopplungsabtrieb auf. Der erste Kopplungsabtrieb des ersten Verteilergetriebes ist dabei ebenso wie der zweite Kopplungsabtrieb des zweiten Verteilergetriebes mit der Kopplungswelle koppelbar. Somit kann über die Kopplungswelle im gekoppelten Zustand eine Triebverbindung zwischen dem ersten Verteilergetriebe und dem zweiten Verteilergetriebe hergestellt werden. Dies ermöglicht beispielsweise die Übertragung von Antriebsleistung vom ersten Elektromotor zur zweiten Achse oder vom zweiten Elektromotor zur ersten Achse. Sofern Antriebsleistung vom ersten Elektromotor zur zweiten Achse übertragen werden soll, wird die erste Achse vorteilhaft gesperrt. Umgekehrt wird vorteilhaft die zweite Achse gesperrt, wenn Antriebsleistung vom zweiten Elektromotor zur ersten Achse übertragen werden soll. Somit kann über den ersten und zweiten Kopplungsabtrieb sowie die Kopplungswelle ein vollwertiger und insbesondere sperrbarer Allradantrieb bereitgestellt werden. Tritt nämlich Schlupf an einer der beiden Achsen auf, so kann die Antriebsleistung des zugeordneten Elektromotors dennoch zum Vortrieb genutzt werden, indem die entsprechende Achse gesperrt wird, so dass die Antriebsleistung zu derjenigen Achse weitergeleitet wird, die keinen Schlupf erfährt. Da somit also die Antriebsleistung des ersten und des zweiten Elektromotors koppelbar ist, kann vorteilhaft darauf verzichtet werden, zwei entsprechend leistungsstärkere, schwerere und teurere Elektromotoren zu verwenden, welche jeweils auch einzeln die maximale Antriebsleistung bereitstellen könnten.

Erfindungsgemäß ist es nun vorgesehen, dass das erste Verteilergetriebe weiterhin einen ersten Nebenabtrieb aufweist. Somit unterscheidet sich der erfindungsgemäße Antriebsstrang von aus dem Stand der Technik bekannten, gattungsgemäßen Antriebssträngen dadurch, dass das erste Verteilergetriebe mit dem ihm zugeordneten ersten Elektromotor nicht nur die erste Achse antreibt, sondern darüber hinaus auch einen Nebenabtrieb antreiben kann. Der erste Elektromotor kann also sowohl die erste Achse als auch den ersten Nebenabtrieb antreiben, wodurch sich der Vorteil ergibt, dass - gegenüber dem Stand der Technik - kein zusätzlicher Elektromotor vorgesehen sein muss, um einen Nebenabtrieb anzutreiben. Beispielsweise kann der erste Elektromotor die erste Achse und den ersten Nebenabtrieb gleichzeitig antreiben oder situationsabhängig bzw. nach Maßgabe einer entsprechenden Fahrervorgabe nur den ersten Nebenabtrieb oder nur die erste Achse antreiben. Sofern der erste Elektromotor nur den ersten Nebenabtrieb antreibt, kann der Nebenabtrieb völlig drehzahlunabhängig betrieben werden. Der zweite Elektromotor kann währenddessen beispielsweise die zweite Achse antreiben und somit den erforderlichen Vortrieb für eine Fortbewegung des Fahrzeugs bereitstellen.

Im Stillstand eines den erfindungsgemäßen Antriebsstrangs aufweisenden Fahrzeugs kann der Nebenabtrieb also vollkommen unabhängig vom Fahrbetrieb betrieben werden. Ebenso kann der Nebenabtrieb immer dann unabhängig vom Fahrantrieb betrieben werden, wenn der zweite Elektromotor alleine ausreichend Antriebsleistung für den Fahrbetrieb zur Verfügung stellen kann. Sofern jedoch der erste Elektromotor zusätzlich zum zweiten Elektromotor für den Fahrbetrieb benötigt wird, so kann der Nebenabtrieb nur mit einer durch den Fahrbetrieb vorgegebenen Motordrehzahl des ersten Elektromotors betrieben werden.

Das erste und das zweite Verteilergetriebe sind also zumindest funktional identisch, insbesondere aber sogar vollkommen baugleich, d.h., es handelt sich beim ersten und beim zweiten Verteilergetriebe um baugleiche Getriebe.

Das erste und das zweite Verteilergetriebe sind bevorzugt jeweils als schaltbares und mindestens zweistufiges Getriebe ausgebildet, so dass bedarfsweise eine geeignete Übersetzung des vom ersten bzw. zweiten Elektromotor bereitgestellten und in das Getriebe eingeleiteten Drehmoments sowie der vom ersten bzw. zweiten Elektromotor bereitgestellten und in das Getriebe eingeleiteten Drehzahl eingestellt werden kann.

Bevorzugt sind das erste und das zweite Verteilergetriebe jeweils als Stirnradgetriebe ausgebildet.

Ebenso können auch der erste und der zweite Elektromotor baugleiche Elektromotoren sein.

Der erste und der zweite Elektromotor können jeweils als Synchron- oder als Asynchronmaschine ausgebildet sein, insbesondere als dreiphasige Synchron- oder als dreiphasige Asynchronmaschinen.

Dem ersten und dem zweiten Elektromotor ist vorteilhaft jeweils ein Inverter zugeordnet, der elektrischen Gleichstrom, welcher vorzugsweise von einer elektrischen Batterie bereitgestellt wird, in zur Ansteuerung bzw. zum Betrieb des ersten bzw. zweiten Elektromotors geeigneten Wechselstrom umrichtet.

Die erste Achse kann beispielsweise vorteilhaft als lenkbare angetriebene Achse ausgebildet sein und die zweite Achse kann beispielsweise als nicht-lenkbare angetriebene Achse ausgebildet sein. Ebenso kann auch umgekehrt die zweite Achse lenkbare angetriebene Achse ausgebildet sein und die erste Achse als nicht-lenkbare angetriebene Achse.

Gemäß einer bevorzugten Ausführungsform der Erfindung ist es vorgesehen, dass der erste Achsabtrieb über ein erstes Achsabtriebskoppelement mit dem ersten Elektromotor koppelbar ist, dass der erste Nebenabtrieb über ein erstes Nebenabtriebskoppelelement mit dem ersten Elektromotor koppelbar ist, dass der erste Kopplungsabtrieb über ein erstes Kopplungsabtriebskoppelelement mit dem ersten Elektromotor koppelbar ist, dass der zweite Achsabtrieb über ein zweites Achsabtriebskoppelement mit dem zweiten Elektromotor koppelbar ist und dass der zweite Kopplungsabtrieb über ein zweites Kopplungsabtriebskoppelelement mit dem zweiten Elektromotor koppelbar ist. Somit können die genannten Elemente also bedarfsweise mit dem ersten bzw. zweiten Elektromotor triebverbunden werden und wieder entkoppelt werden. Vorteilhaft ist jedem der genannten Elemente zudem eine Bremse zugeordnet, um das jeweilige Element festzusetzen und ein ungewolltes, ggf. schleichendes Verdrehen zu vermeiden. Insbesondere kann auch die Kopplungswelle vollständig stillgesetzt werden, indem sie sowohl vom ersten Elektromotor als auch vom zweiten Elektromotor entkoppelt wird, so dass sie im Fahrbetrieb kein Schleppmoment erzeugt.

Gemäß einer weiteren bevorzugten Ausführungsform der Erfindung ist es vorgesehen, dass das zweite Verteilergetriebe weiterhin einen zweiten Nebenabtrieb aufweist, wobei der zweite Nebenabtrieb über ein zweites Nebenabtriebskoppelelement mit dem zweiten Elektromotor koppelbar ist. Somit steht mit dem zweiten Nebenabtrieb ein weiterer Nebenabtrieb zur Verfügung, der zusätzlich oder alternativ zum ersten Nebenabtrieb und in analoger Weise wie der erste Nebenabtrieb verwendet werden kann.

Gemäß einer besonders bevorzugten Ausführungsform der Erfindung ist es vorgesehen, dass das erste Kopplungsabtriebskoppelelement im ersten Verteilergetriebe angeordnet ist und das zweite Kopplungsabtriebskoppelelement zweiten Verteilergetriebe angeordnet ist. Unter einer Anordnung im ersten bzw. zweiten Verteilergetriebe wird verstanden, dass das erste Kopplungsabtriebskoppelelement von einem Gehäuse des ersten Verteilergetriebes eingehaust ist und dass das zweite Kopplungsabtriebskoppelelement von einem Gehäuse des zweiten Verteilergetriebes eingehaust ist. Daraus ergibt sich der Vorteil, dass keine weiteren Koppelelemente mit jeweils einem eigenen Gehäuse vorgesehen werden müssen. Somit kann Bauraum gespart werden.

Gemäß einer weiteren bevorzugten Ausführungsform der Erfindung ist es vorgesehen, dass der erste Achsabtrieb und der erste Kopplungsabtrieb gegenüber dem ersten Eintrieb eine identische Drehzahluntersetzung aufweisen und dass der zweite Achsabtrieb und der zweite Kopplungsabtrieb gegenüber dem zweiten Eintrieb dieselbe identische Drehzahluntersetzung aufweisen. Dies vereinfacht den Aufbau der Verteilergetriebe sowie die Weiterleitung von Antriebsleistung zwischen dem ersten Verteilergetriebe sowie dem zweiten Verteilergetriebe gleichermaßen.

Gemäß einer weiteren bevorzugten Ausführungsform der Erfindung ist es vorgesehen, dass dem ersten Verteilergetriebe mehrere erste Achsen zugeordnet sind. Dazu weisen die ersten Achsen vorteilhaft einen Durchtrieb auf, so dass die Antriebsleistung auf alle ersten Achsen verteilt werden kann. Den Durchtrieben der einzelnen Achsen können vorteilhaft auch Sperren zugeordnet sein, um einen oder mehrere Durchtriebe zu sperren. Alle ersten Achsen werden dabei vom ersten Elektromotor über das erste Verteilergetriebe mit Antriebsleistung versorgt.

Gemäß einer weiteren bevorzugten Ausführungsform der Erfindung ist es vorgesehen, dass dem zweiten Verteilergetriebe mehrere zweite Achsen zugeordnet sind. Auch die zweiten Achsen weisen vorteilhaft einen Durchtrieb auf, so dass die Antriebsleistung des zweiten Elektromotors entsprechend auf alle zweiten Achsen verteilt werden kann. Auch den Durchtrieben der zweiten Achsen können vorteilhaft Sperren zugeordnet sein, um einen oder mehrere Durchtriebe zu sperren. Alle zweiten Achsen werden dabei vom zweiten Elektromotor über das zweite Verteilergetriebe mit Antriebsleistung versorgt.

Gemäß einer weiteren bevorzugten Ausführungsform der Erfindung ist es vorgesehen, dass der erste Nebenabtrieb mit einem zusätzlichen ersten Elektromotor triebverbunden ist. In diesem Fall wird der erste Nebenabtrieb also als zusätzlicher Eintrieb verwendet, über den der zusätzliche erste Elektromotor zusätzliche Antriebsleistung in das erste Verteilergetriebe einleiten kann. Somit kann auf einfache Weise die über das erste Verteilergetriebe bereitstellbare Antriebsleistung vergrößert werden.

Gemäß einer weiteren bevorzugten Ausführungsform der Erfindung ist es vorgesehen, dass der zweite Nebenabtrieb mit einem zusätzlichen zweiten Elektromotor triebverbunden ist. Ebenso wie der erste Nebenabtrieb kann zusätzlich oder alternativ auch der zweite Nebenabtrieb mit einem zusätzlichen zweiten Elektromotor triebverbunden werden. Entsprechend kann hierdurch die über das zweite Verteilergetriebe bereitstellbare Antriebsleistung vergrößert werden.

Die Erfindung betrifft weiterhin ein Fahrzeug, umfassend einen erfindungsgemäßen Antriebsstrang. Daraus ergeben sich die bereits beschrieben Vorteile auch für das erfindungsgemäße Fahrzeug.

Bevorzugt handelt es sich bei dem Fahrzeug um eine geländegängige Arbeitsmaschine, einen Kran, einen allradgetriebenen LKW, einen Radpanzer oder ein geländegängiges Sonderfahrzeug.

Insbesondere ist es vorgesehen, dass die Arbeitsmaschine als Radlader, Dumper, Bagger, Teleskoplader oder Traktor ausgebildet ist.

Nachfolgend wird die Erfindung anhand von in den Figuren dargestellten Ausführungsformen beispielhaft erläutert.

Es zeigen:
- Fig. 1: beispielhaft und schematisch eine mögliche Ausführungsform eines erfindungsgemäßen elektrisch betreibbaren Antriebsstrangs,
- Fig. 2: beispielhaft und schematisch eine weitere mögliche Ausführungsform eines erfindungsgemäßen elektrisch betreibbaren Antriebsstrangs und
- Fig. 3: beispielhaft und schematisch eine nochmals weitere mögliche Ausführungsform eines erfindungsgemäßen elektrisch betreibbaren Antriebsstrangs.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

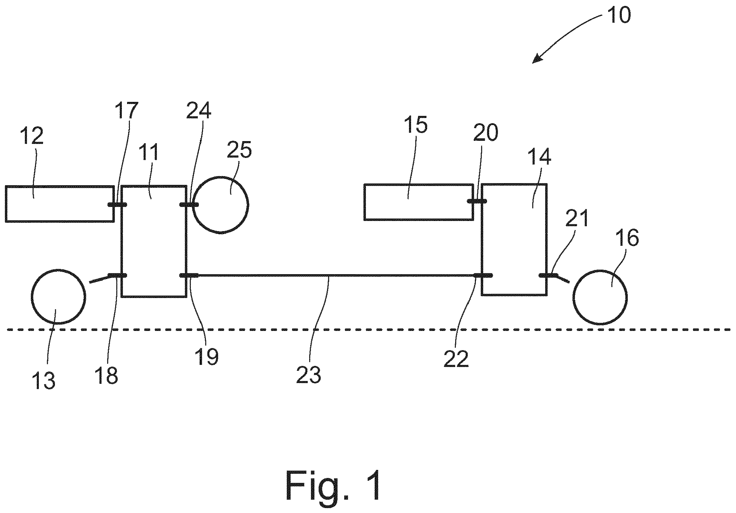

Fig. 1 zeigt beispielhaft und schematisch eine mögliche Ausführungsform eines erfindungsgemäßen elektrisch betreibbaren Antriebsstrangs 10. Der Antriebsstrang 10 umfasst ein erstes Verteilergetriebe 11, einen ersten Elektromotor 12 und eine erste Achse 13 sowie ein zweites Verteilergetriebe 14, einen zweiten Elektromotor 15 und eine zweite Achse 16.

Das erste Verteilergetriebe weist einen ersten Eintrieb 17, einen ersten Achsabtrieb 18 und einen ersten Kopplungsabtrieb 19 auf. Entsprechend weist das zweite Verteilergetriebe 14 einen zweiten Eintrieb 20, einen zweiten Achsabtrieb 21 und einen zweiten Kopplungsabtrieb 22 auf. Der erste Kopplungsabtrieb 19 und der zweite Kopplungsabtrieb 22 sind über eine Kopplungswelle 23 gekoppelt.

Wie weiterhin zu sehen ist, weist das erste Verteilergetriebe 11 einen ersten Nebenabtrieb 24 auf, über den beispielsgemäß ein mechanischer Nebenverbraucher 25 angetrieben wird.

Das erste Verteilergetriebe 11 ermöglicht es, dass der erste Achsabtrieb 18 über ein erstes Achsabtriebskoppelement (nicht dargestellt in Fig. 1) mit dem ersten Elektromotor 12 gekoppelt bzw. entkoppelt wird. Ebenso ermöglicht es das erste Verteilergetriebe 11, dass der erste Nebenabtrieb 24 über ein erstes Nebenabtriebskoppelelement (nicht dargestellt in Fig. 1) mit dem ersten Elektromotor 12 gekoppelt bzw. entkoppelt wird und dass der erste Kopplungsabtrieb 19 über ein erstes Kopplungsabtriebskoppelelement (nicht dargestellt in Fig. 1) mit dem ersten Elektromotor 12 gekoppelt bzw. entkoppelt wird. Das erste Kopplungsabtriebskoppelelement ist dabei beispielsgemäß im Gehäuse des ersten Verteilergetriebes 11 angeordnet.

Der erste Achsabtrieb 18 und der erste Kopplungsabtrieb 19 weisen gegenüber dem ersten Eintrieb 17 beispielsgemäß eine identische Drehzahluntersetzung auf.

In analoger Weise ermöglicht es das zweite Verteilergetriebe 14, dass der zweite Achsabtrieb 21 über ein zweites Achsabtriebskoppelement (nicht dargestellt in Fig. 1) mit dem zweiten Elektromotor 15 gekoppelt bzw. entkoppelt wird und dass der zweite Kopplungsabtrieb 22 über ein zweites Kopplungsabtriebskoppelelement (nicht dargestellt in Fig. 1) mit dem zweiten Elektromotor 15 gekoppelt bzw. entkoppelt wird. Das zweite Kopplungsabtriebskoppelelement ist dabei beispielsgemäß im Gehäuse des zweiten Verteilergetriebes 14 angeordnet.

Der zweite Achsabtrieb 21 und der zweite Kopplungsabtrieb 22 weisen gegenüber dem zweiten Eintrieb 20 beispielsgemäß eine identische Drehzahluntersetzung auf. Diese Drehzahluntersetzung ist beispielsgemäß zudem identisch zur Drehzahluntersetzung des ersten Kopplungsabtriebs 19 bzw. des ersten Achsabtriebs 18 gegenüber dem ersten Eintrieb 17.

Indem der erste Kopplungsabtrieb 19 und der der zweite Kopplungsabtrieb 22 vom ersten Elektromotor 12 bzw. vom zweiten Elektromotor 15 entkoppelt werden können, kann die Kopplungswelle 23 antriebslos geschaltet werden. Somit erzeugt die Kopplungswelle 23 im Betrieb des ersten Verteilergetriebes 11 und des zweiten Verteilergetriebes 14 kein Schleppmoment, wenn das erste und das zweite Kopplungsabtriebskoppelelement gelöst sind.

Sofern das erste und das zweite Kopplungsabtriebskoppelelement jedoch geschlossen sind, kann bedarfsweise Antriebsleistung vom ersten Elektromotor 12 zum zweiten Verteilergetriebe 14 und umgekehrt vom zweiten Elektromotor 15 zum ersten Verteilergetriebe 11 geführt werden. Wenn also beispielsweise ein übermäßiges Schlupfen der ersten Achse festgestellt wird, kann die erste Achse 13 über das erste Achsabtriebskoppelement gesperrt werden. Die Antriebsleistung des ersten Elektromotors 12 wird dann über die Kopplungswelle 23 und das zweite Verteilergetriebe 14 zum Antrieb der zweiten Achse 16 bereitgestellt.

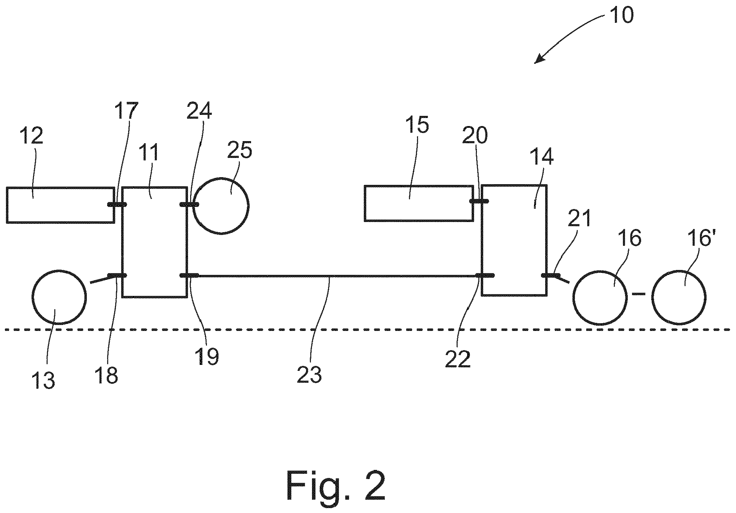

Fig. 2 zeigt beispielhaft und schematisch eine weitere mögliche Ausführungsform eines erfindungsgemäßen elektrisch betreibbaren Antriebsstrangs 10. Der Antriebsstrang 10 der Fig. 2 unterscheidet sich vom Antriebsstrang 10 der Fig. 1 dadurch, dass dem zweiten Verteilergetriebe 14 zwei zweite Achsen 16, 16' zugeordnet sind, die beide über den zweiten Achsabtrieb 21 angetrieben werden.

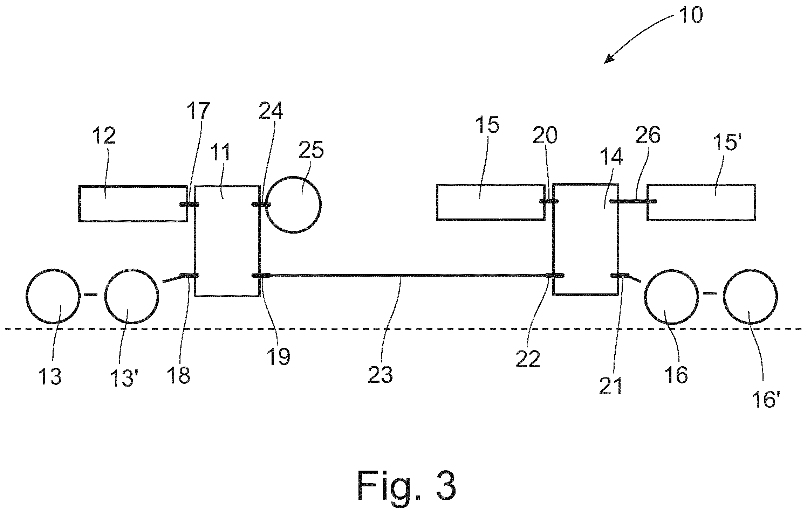

Fig. 3 zeigt beispielhaft und schematisch eine nochmals weitere mögliche Ausführungsform eines erfindungsgemäßen elektrisch betreibbaren Antriebsstrangs 10. Der Antriebsstrang 10 der Fig. 3 unterscheidet sich vom Antriebsstrang 10 der Fig. 2 dadurch, dass auch dem ersten Verteilergetriebe 11 zwei erste Achsen 13, 13' zugeordnet sind, die beide entsprechend über den ersten Achsabtrieb 18 angetrieben werden.

Zusätzlich weist der Antriebsstrangs 10 der Fig. 3 am zweiten Verteilergetriebe einen zweiten Nebenabtrieb 26 auf, wobei der zweite Nebenabtrieb 26 über ein zweites Nebenabtriebskoppelelement (nicht dargestellt in Fig. 3) mit dem zweiten Elektromotor 15 koppelbar ist. Beispielsgemäß ist mit dem zweiten Nebenabtrieb 26 jedoch kein Nebenverbraucher 25 triebverbunden, sondern vielmehr ein zusätzlicher zweiter Elektromotor 15', welcher über den zweiten Nebenabtrieb 26 zusätzliche Antriebsleistung in das zweite Verteilergetriebe 14 eintreiben kann. Der zweite Nebenabtrieb 26 wird beispielsgemäß also ein zusätzlicher Eintrieb ins zweite Verteilergetriebe 14 genutzt.

### Bezugszeichen

- 10: Antriebsstrang
- 11: erstes Verteilergetriebe
- 12: erster Elektromotor
- 13, 13': erste Achse
- 14: zweites Verteilergetriebe
- 15, 15': zweiter Elektromotor
- 16, 16': zweite Achse
- 17: erster Eintrieb
- 17': Spurhebel, Lenkgestänge
- 17": Lenkhebel, Lenkgestänge
- 18: erster Achsabtrieb
- 19: erster Kopplungsabtrieb
- 20: zweiter Eintrieb
- 21: zweiter Achsabtrieb
- 22: zweiter Kopplungsabtrieb
- 23: Kopplungswelle
- 24: erster Nebenabtrieb
- 25: Nebenverbraucher
- 26: zweiter Nebenabtrieb

## Patentansprüche

1. Elektrisch betreibbarer Antriebsstrang (10),
umfassend ein erstes Verteilergetriebe (11), einen ersten Elektromotor (12) und eine erste Achse (13, 13') sowie
ein zweites Verteilergetriebe (14), einen zweiten Elektromotor (15, 15') und eine zweite Achse (16, 16'),
wobei das erste Verteilergetriebe (11) einen ersten Eintrieb (17), einen ersten Achsabtrieb (18) und einen ersten Kopplungsabtrieb (19) aufweist,
wobei das zweite Verteilergetriebe (14) einen zweiten Eintrieb (20), einen zweiten Achsabtrieb (21) und einen zweiten Kopplungsabtrieb (22) aufweist und
wobei der erste Kopplungsabtrieb (19) mit dem zweiten Kopplungsabtrieb (22) über eine Kopplungswelle (23) koppelbar ist,
**dadurch gekennzeichnet, dass** das erste Verteilergetriebe (11) weiterhin einen ersten Nebenabtrieb (24) aufweist.

2. Antriebsstrang (10) nach Anspruch 1,
**dadurch gekennzeichnet, dass** der erste Achsabtrieb (18) über ein erstes Achsabtriebskoppelement mit dem ersten Elektromotor (12) koppelbar ist,
dass der erste Nebenabtrieb (17) über ein erstes Nebenabtriebskoppelelement mit dem ersten Elektromotor (12) koppelbar ist,
dass der erste Kopplungsabtrieb (19) über ein erstes Kopplungsabtriebskoppelelement mit dem ersten Elektromotor (12) koppelbar ist,
dass der zweite Achsabtrieb (21) über ein zweites Achsabtriebskoppelement mit dem zweiten Elektromotor (15, 15') koppelbar ist und
dass der zweite Kopplungsabtrieb (22) über ein zweites Kopplungsabtriebskoppelelement mit dem zweiten Elektromotor (15, 15') koppelbar ist.

3. Antriebsstrang (10) nach mindestens einem der Ansprüche 1 und 2,
**dadurch gekennzeichnet, dass** das zweite Verteilergetriebe (14) weiterhin einen zweiten Nebenabtrieb (26) aufweist, wobei der zweite Nebenabtrieb (26) über ein zweites Nebenabtriebskoppelelement mit dem zweiten Elektromotor (15, 15') koppelbar ist.

4. Antriebsstrang (10) nach Anspruch 3,
**dadurch gekennzeichnet, dass** das erste Kopplungsabtriebskoppelelement im ersten Verteilergetriebe (11) angeordnet ist und das zweite Kopplungsabtriebskoppelelement im zweiten Verteilergetriebe (14) angeordnet ist.

5. Antriebsstrang (10) nach mindestens einem der Ansprüche 1 bis 4,
**dadurch gekennzeichnet, dass** der erste Achsabtrieb (18) und der erste Kopplungsabtrieb (19) gegenüber dem ersten Eintrieb (17) eine identische Drehzahluntersetzung aufweisen und
dass der zweite Achsabtrieb (21) und der zweite Kopplungsabtrieb (22) gegenüber dem zweiten Eintrieb (20) dieselbe identische Drehzahluntersetzung aufweisen.

6. Antriebsstrang (10) nach mindestens einem der Ansprüche 1 bis 5,
**dadurch gekennzeichnet, dass** dem ersten Verteilergetriebe (11) mehrere erste Achsen (13, 13') zugeordnet sind.

7. Antriebsstrang (10) nach mindestens einem der Ansprüche 1 bis 6,
**dadurch gekennzeichnet, dass** dem zweiten Verteilergetriebe (14) mehrere zweite Achsen (16, 16') zugeordnet sind.

8. Antriebsstrang (10) nach mindestens einem der Ansprüche 1 bis 7,
**dadurch gekennzeichnet, dass** der erste Nebenabtrieb (24) mit einem zusätzlichen ersten Elektromotor triebverbunden ist.

9. Antriebsstrang (10) nach mindestens einem der Ansprüche 1 bis 8,
**dadurch gekennzeichnet, dass** der zweite Nebenabtrieb (26) mit einem zusätzlichen zweiten Elektromotor (15') triebverbunden ist.

10. Fahrzeug, umfassend einen Antriebsstrang (10) nach mindestens einem der Ansprüche 1 bis 9.
